# EUROPÄISCHE PATENTANMELDUNG

(11) **EP 2 226 503 A1**
(43) Veröffentlichungstag der Anmeldung: **08.09.2010**
(21) Anmeldenummer: 10001437.2
(22) Anmeldetag: 11.02.2010
(51) Int. Cl.: F04B 27/00, F04B 39/06, F04B 39/12, F04B 41/06, F04B 53/08, F16J 10/00

(54) **Kolbenverdichter**

(30) Priorität: 04.03.2009 DE 102009011214
(71) Anmelder: Voith Patent GmbH, 89522 Heidenheim (DE); Technische Universität Dresden, 01069 Dresden (DE)
(72) Erfinder: Nickl, Jörg, Dr., 01744 Malter (DE); Bredel, Eberhard, 09437 Börnichen (DE)
(74) Vertreter: Dr. Weitzel & Partner

(57) **Zusammenfassung**

Die Erfindung betrifft einen zwei- oder mehrstufigen Verdichter zum Verdichten eines Gases, umfassend die folgenden Bauteile beziehungsweise Merkmale:
- eine mindestens der Anzahl der Stufen entsprechende Zahl von Zylindern;
- wenigstens einer der Zylinder umfasst eine innere Laufbuchse aus einem standfesten Werkstoff wie Grauguss, und eine äußere Buchse aus einem leichten Werkstoff wie Aluminium;
- wenigstens einer der Zylinder weist einen Ringspalt zwischen der inneren Laufbuchse und der äußeren Buchse auf;
- der Ringspalt weist einen Einlass und einen Auslass für ein Kühlmedium auf

## Beschreibung

Die Erfindung betrifft einen Kolbenverdichter zum Verdichten eines Gases, insbesondere von Luft. Dabei geht es um zwei- oder mehrstufige Verdichter. Die Erfindung betrifft Verdichter für Fahrzeuge, auch Luftpresser genannt.

Ein Verdichter der in Rede stehenden Art umfasst zwei oder mehrere Zylinder. Die Zylinder sind in Reihe geschaltet. Demgemäß wird das zu verdichtende Medium zunächst auf einen ersten Wert verdichtet. Sodann wird es dem zweiten Zylinder zugeführt und auf einen zweiten, noch höheren Wert verdichtet. Beim Verdichten erhöht sich die Temperatur des Druckmediums beim Eintreten in den Zylinder von einem niedrigen Wert von zum Beispiel 20 °C, um nach dem Verdichten mit beispielsweise 200 °C wieder auszutreten. Daher ist eine Kühlung erforderlich. Zu diesem Zweck ist eine Kühleinrichtung zwischen die beiden Druckstufen vorgesehen.

An Verdichter werden die folgenden Anforderungen gestellt: Die Zylinder müssen die notwendige Festigkeit aufweisen, um vor allem die Normalkräfte des Kolbens aufnehmen zu können. Sie sollen gleichzeitig leicht sein, was insbesondere bei Verwendung für Kraftfahrzeuge in zunehmendem Maße gefordert wird. Die Kühlung soll optimal sein. Schließlich soll der Verdichter einfach im Aufbau und kostengünstig in der Herstellung sein.

Bei bekannten Verdichtern für Nutzfahrzeuge wurde die Gesamtheit dieser Anforderungen nicht erfüllt.

Der Erfindung liegt die Aufgabe zugrunde, einen insbesondere mehrstufigen Verdichter anzugeben, der den Anforderungen entspricht. Er soll somit bezüglich Festigkeit, Aufbau, Bauvolumen und Kühlung den Anforderungen entsprechen.

Diese Aufgabe wird durch die Merkmale von Anspruch 1 gelöst.

Demgemäß weist wenigstens einer der Zylinder eine innere Laufbuchse sowie eine äußere Buchse auf, zwischen denen ein Ringspalt zum Hindurchschicken eines Kühlmediums verbleibt.

Gemäß einer besonders vorteilhaften Ausführungsform der Erfindung weist ein insbesondere zweistufiger Verdichter die folgenden Merkmale auf:
- wenigstens der Zylinder der letzten Stufe umfasst eine innere Laufbuchse aus einem standfesten Werkstoff wie Grauguss, und eine äußere Buchse aus einem leichten Werkstoff wie Aluminium;
- wenigstens der Zylinder der letzten Stufe weist einen Ringspalt zwischen der inneren Laufbuchse und der äußeren Buchse auf;
- der Ringspalt weist einen Einlass und einen Auslass für ein Kühlmedium auf;
- die äußere Buchse kann aus dem Gehäuse des Luftpressers gebildet werden.

Dieser Ausführungsform der Erfindung liegt die folgende Überlegung zugrunde: Bei einem insbesondere zweistufigen Verdichter liegen die Temperaturen des verdichteten Mediums erst in der letzten Stufe über den Temperaturen des Kühlmediums. Deswegen wird nur der in Verdichtungsrichtung letzte Zylinder doppelwandig mit einem Ringspalt für das Kühlmedium gestaltet, indem er eine innere Laufbuchse und eine äußere Buchse aufweist.

Doppelwandige aber ungekühlte Zylinder sind bei Kältemittelkompressoren bekannt. Die beiden Zylinderbuchsen liegen dabei eng beieinander. Außerdem ist es bei befeuerten Motoren bekannt, den Zylinder doppelwandig auszuführen, mit einem gekühlten Ringspalt zwischen den beiden Zylinderbuchsen. Beide dieser Maschinenarten stellen jedoch jeweils eine andere Gattung als die hier behandelten Luftpresser dar, und sind daher mit diesem nicht zu vergleichen.

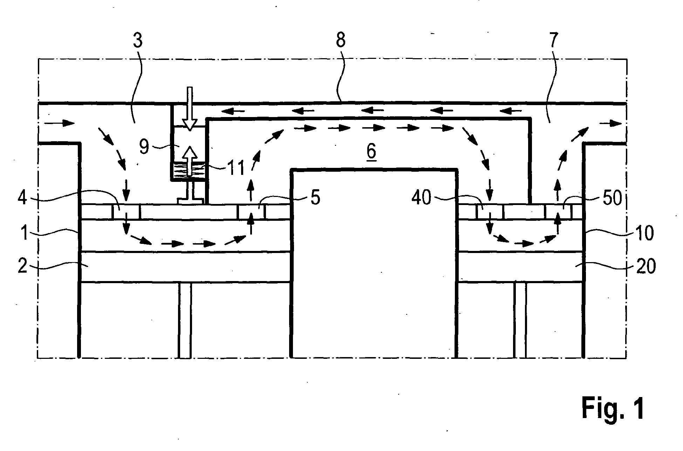

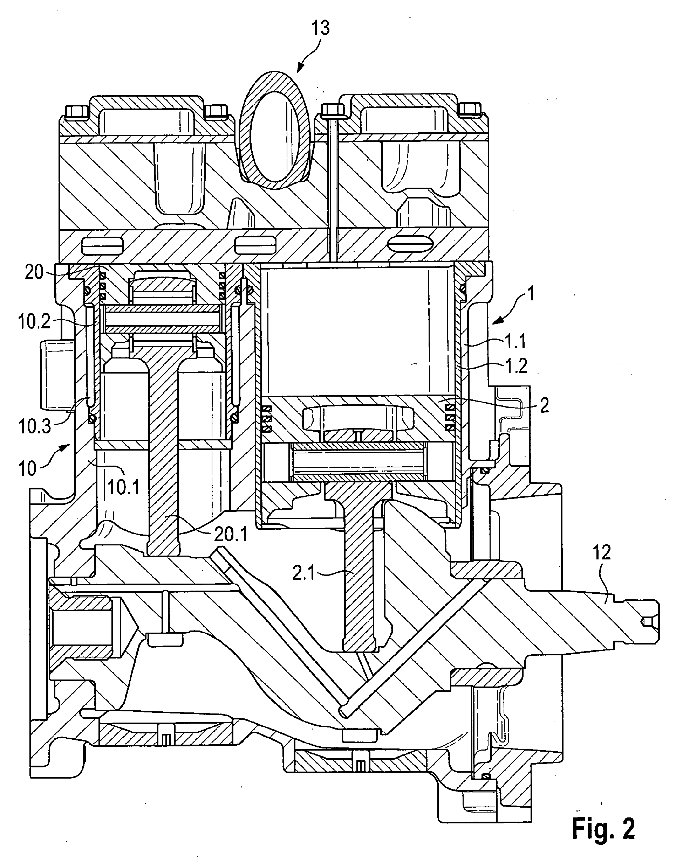

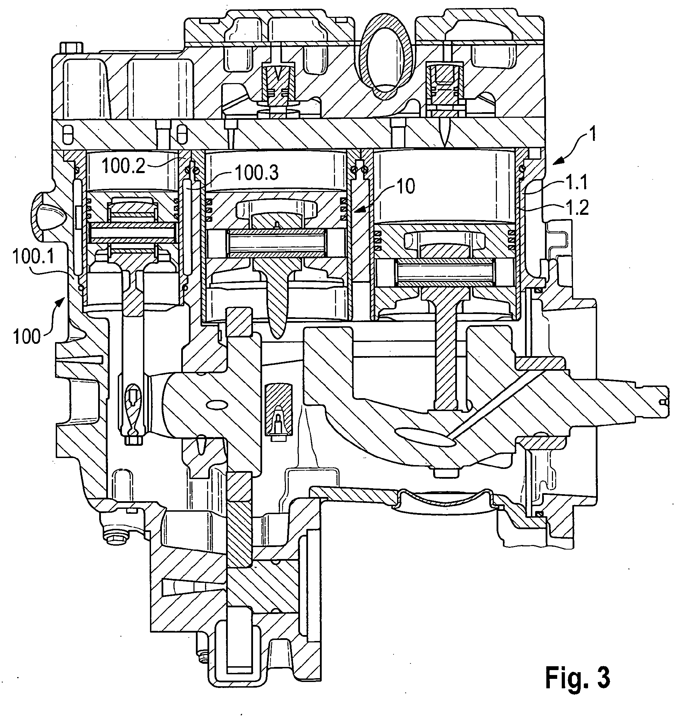

Der Stand der Technik sowie die Erfindung sind anhand der Zeichnung näher erläutert. Darin ist im Einzelnen Folgendes dargestellt:

Die Figur veranschaulicht in schematischer Darstellung einen zweistufigen Luftpresser.

Der Luftpresser umfasst eine erste Verdichterstufe mit einem Zylinder 1 und einem Kolben 2, sowie eine zweite Verdichterstufe mit einem Zylinder 10 und einem Kolben 20.

Die Luft wird vom Kolben 2 der ersten Stufe aus einer Saugkammer 3 angesaugt. Dabei tritt sie durch ein Saugventil 4 in den Zylinder 1 ein. Nach ihrer Verdichtung gelangt sie durch ein Druckventil 5 in eine Zwischenkammer 6 mit einem nicht näher dargestellten Kühler.

Die Luft gelangt sodann durch ein weiteres Saugventil 40 in den Zylinder 10 der zweiten Verdichterstufe, und tritt nach Verdichtung durch ein Druckventil 50 aus den Zylinder 10 aus, und gelangt zu einer Druckkammer 7.

In der Figur ist der Vollständigkeit halber ebenfalls ein bekanntes Entlastungssystem gezeigt. Dabei gelangt Luft aus der Druckkammer 7 über eine Abzweigleitung 8 zu einem Entlastungskolben 9, der von einer Feder 11 entgegen dem Druck der Luft aus der Abzweigleitung 8 beaufschlagt ist.

Das Gehäuse des Luftpressers besteht weitestgehend aus Aluminium.

Die beiden Zylinder 1 und 10 sind doppelwandig, wie anhand des zweiten Zylinders 10 veranschaulicht. Dabei ist die äußere Zylinderbuchse 10.1 der zweiten Verdichterstufe aus dem Gehäuse gebildet und somit aus Aluminium. Die innere Zylinderbuchse 10.2 besteht aus Grauguss.

Bei der ersten Verdichterstufe ist die innere Zylinderbuchse in die äußere Zylinderbuchse praktisch spaltfrei eingeschoben. Hingegen befindet sich bei der zweiten Verdichterstufe zwischen der äußeren Zylinderbuchse 10.1 und der inneren Zylinderbuchse 10.2 ein Ringspalt 10.3. Der Ringspalt 10.3 kann sich über einen Teil der Länge des Zylinders 10 erstrecken, oder über die gesamte Zylinderlänge, oder über den Hub des Kolbens 20 der zweiten Verdichterstufe.

Entscheidend ist, dass der Ringspalt 10.3 des Zylinders 10 der zweiten Verdichterstufe an ein Kühlmedium angeschlossen ist, das den Ringspalt durchströmt. Der Einlass und der Auslass können an jeglichen Stellen der axialen Erstreckung des Ringspaltes 10.3 liegen, wobei aus Gründen der Entlüftung der Auslass im oberen Totpunktbereich liegen sollte.

Den Kolben 2 und 20 der beiden Verdichterstufen ist jeweils eine Pleuelstange 2.1 beziehungsweise 20.1 zugeordnet. Diese arbeiten auf eine Kurbelwelle 12.

Die Kühleinrichtung 13 dient zum Zwischenkühlen des von der ersten Verdichterstufe kommenden Gases, im vorliegenden Ausführungsbeispiel der Luft. Die verdichtete Luft tritt somit in den zweiten Zylinder 10 bereits mit einer etwas verringerten Temperatur ein. Ein Kühlmedium, das durch den Ringspalt 10.3 hindurchtritt, bewirkt eine weitere Kühlung des Gases in der zweiten Verdichterstufe. Das Kühlmedium wird im Allgemeinen Wasser bzw. Kühlwasser des Motors sein.

### Bezugszeichenliste

- 1: Zylinder 1. Stufe
- 2: Kolben 1. Stufe
- 2.1: Pleuel 1. Stufe
- 3: Saugkammer
- 4: Saugventil 1. Stufe
- 5: Druckventil 1. Stufe
- 6: Zwischenkammer
- 7: Druckkammer
- 8: Abzweigleitung
- 9: Entlastungskolben
- 10: Zylinder 2. Stufe
- 10.1: äußere Zylinderbuchse 2. Stufe
- 10.2: innere Zylinderbuchse 2. Stufe
- 10.3: Ringspalt
- 11: Feder
- 12: Kurbelwelle
- 13: Kühleinrichtung
- 20: Kolben 2. Stufe
- 20.1: Pleuel 2. Stufe
- 40: Saugventil 2. Stufe
- 50: Druckventil 2. Stufe
- 51: Druckventil 2. Stufe

## Patentansprüche

1. Zwei- oder mehrstufiger Verdichter zum Verdichten eines Gases, umfassend die folgenden Bauteile beziehungsweise Merkmale:
1.1 eine mindestens der Anzahl der Stufen entsprechende Zahl von Zylindern (1, 10);
1.2 wenigstens einer der Zylinder umfasst eine innere Laufbuchse aus einem standfesten Werkstoff wie Grauguss, und eine äußere Buchse aus einem leichten Werkstoff wie Aluminium;
1.3 wenigstens einer der Zylinder (10) weist einen Ringspalt (10.3) zwischen der inneren Laufbuchse und der äußeren Buchse auf;
1.4 der Ringspalt weist einen Einlass und einen Auslass für ein Kühlmedium auf.

2. Verdichter nach Anspruch 1, **gekennzeichnet durch** die folgenden Merkmale:
2.1 wenigstens der Zylinder (10) der letzten Stufe umfasst eine innere Laufbuchse (10.2) aus einem standfesten Werkstoff wie Grauguss, und eine äußere Buchse (10.1) aus einem leichten Werkstoff wie Aluminium;
2.2 wenigstens der Zylinder (10) der letzten Stufe weist einen Ringspalt (10.3) zwischen der inneren Laufbuchse und der äußeren Buchse auf.

## Geänderte Patentansprüche

### Geänderte Patentansprüche gemäss Regel 137(2) EPÜ.

**1.** Zwei- oder mehrstufiger Verdichter zum Verdichten eines Gases, umfassend die folgenden Bauteile beziehungsweise Merkmale:
1.1 eine mindestens der Anzahl der Stufen entsprechende Zahl von Zylindern (1,10); **gekennzeichnet durch** die folgenden Merkmale:
1.2 wenigstens einer der Zylinder umfasst eine innere Laufbuchse aus einem standfesten Werkstoff wie Grauguss, und eine äußere Buchse aus einem leichten Werkstoff wie Aluminium;
1.3 wenigstens einer der Zylinder (10) weist einen Ringspalt (10.3) zwischen der inneren Laufbuchse und der äußeren Buchse auf;
1.4 der Ringspalt weist einen Einlass und einen Auslass für ein Kühlmedium auf.

**2.** Verdichter nach Anspruch 1, **gekennzeichnet durch** die folgenden Merkmale:
2.1 1 wenigstens der Zylinder (10) der letzten Stufe umfasst eine innere Laufbuchse (10.2) aus einem standfesten Werkstoff wie Grauguss, und eine äußere Buchse (10.1) aus einem leichten Werkstoff wie Aluminium;
2.2 wenigstens der Zylinder (10) der letzten Stufe weist einen Ringspalt (10.3) zwischen der inneren Laufbuchse und der äußeren Buchse auf.
